# EUROPEAN PATENT SPECIFICATION

(11) **EP 0 632 875 B1**
(45) Date of publication and mention of the grant of the patent: **09.12.1998**
(21) Application number: 93906929.0
(22) Date of filing: 09.03.1993
(51) Int. Cl.: F24C 15/00, A47J 37/00

(54) **HOT-AIR OVEN FOR PREPARATION OF FOOD BY HOT AIR**
HEISSLUFTOFEN ZUM ZUBEREITEN VON NAHRUNG IN HEISSLUFT
FOUR DE CUISSON DES ALIMENTS DANS L'AIR CHAUD

(30) Priority: 09.03.1992 SE 9200717
(43) Date of publication of application: 11.01.1995
(73) Proprietor: HANSSON, Bengt H., 436 44 Askim (SE)
(72) Inventor: HANSSON, Bengt H., 436 44 Askim (SE)
(74) Representative: Zinngrebe, Horst, Dr.rer.nat.
(86) International application number: PCT/SE93/00204
(87) International publication number: WO 93/18349

(56) References cited:
- CH-A- 631 802
- DE-A- 3 209 541
- US-A- 3 384 067
- US-A- 4 071 738
- US-A- 4 295 419

## Description

The present invention describes a hot-air oven for preparing food without frying fat, said oven comprising a housing and an oven compartment within said housing with a container which is insertable into the oven compartment through a front panel thereof for receiving and preparing food products by means of hot-air heated in the oven compartment by heating devices.

The technique of preparing food in a rotating cooking area being flownthrough by hot air is already known. The prior art ovens using this method have, when put into practical use, often been found to suffer from certain troublesome drawbacks, mainly uncomfortable high temperatures on parts that are touched when using the equipment and in many cases causing burns to the user, forcing him to use protective gloves, saucepan holders or other means of heat protection to be able to take out the cooked product.

It is therefore an object of the invention to devise a hot-air oven for preparing of food in hot-air which minimizes the risk of being burned to the user when taking the cooked product out from the oven.

US-A-4,071,738 discloses a domestic cooking range of the ventilated type having surface elements and an underlying oven characterized by an extension of the ventilating fan motor shaft carrying an auxiliary fan disposed within the oven which provides forced circulation of air in the oven. The oven may thus be selectively operated in the conventional radiant heating mode or in the forced circulation or "convected" mode depending upon whether the ventilating fan motor is in operation. The oven can be held at an elevated temperature for a time interval to accelerate catalytic self-cleaning because of air circulation within the oven door and passages adjacent the door, this cooling air flow being induced by operation of the ventilating fan.

CH-A-631 802 discloses an oven for baking, roasting and grilling wherein a fan sucks in air from the exterior to the oven on one hand through the oven compartment and on the other hand through a channel provided in the access door for the oven compartment.

The object is resolved by an hot-air oven for preparing food as mentioned above wherein a space is designed between the housing and the oven compartment that allows cooling air forced into the space by a cooling air fan to be distributed on the one hand to an air-duct formed in the front panel between shields facing the side of the oven compartment which is not surrounded by the housing and cooling air-ducts connected to the housing for guiding cooling air through the air-duct and, on the other hand, through a ventilation device mounted in the oven compartment for regulating the amount of water vapour in the oven compartment under working conditions. An advantage of the present invention is avoiding burn-causing temperatures on any touchable parts of the oven. Another advantage of the invention resides in the improved qualitiy of the food product. Yet another advantage of the invention is the use of the cooling system to cool the outer touchable housing as well as to improve the qualitiy of the food product. It is further an advantage that the temperature of the outsteaming cooling is reduced. Another advantage is the optimization of the hot-air effect on the food product.

Preferred advantages and embodiments of the invention are defined in the pending sub-claims.

The present invention describes a hot-air oven, not only equipped with cooled outer surfaces under working conditions, but also equipped with a device for controlling the amount of water vapour in the oven compartment during the process, this being vitally important to obtain food products possessing desired specifications as regards external surface and constistency. These specifications may apply for instance to the colour and crispness of the surface, the moistness and the texture of the food product and even other calities. This control can either be done manually or be working according to a predefined program for process regulation, e. g. a microprocessor, in wich, according to the state and the weight of the product and the temperature and the duration of the process, dry air can regulate the humidity of the hot-oven compartment continuously or intermittently. The intermittent regulation can either take place in the beginning, in the middle or at the end of the process or in combinations of time periods proportional to the total duration of the process. The necessity of this is very characteristic for certain kinds of frozen products, especially those that already from the beginning contain a too high amount of water (e.g. frozen products which in freezing stage are glazed with ice, that is, covered with a protecting ice layer). In these cases, fast de-icing and removal of water vapour are important in the initial stages, thereby preventing the water, due to the air in the oven compartment being saturated with water vapour, from penetrating the food product and thus making it sloppy and wet. To be able to control the amount of water vapour in the oven compartment is also of vital importance when cooking fresh goods. When in those cases it is necessary to add water vapour to the process, sach addition can be done with any known method, and this part of the process regulation is not discussed in this presentation.

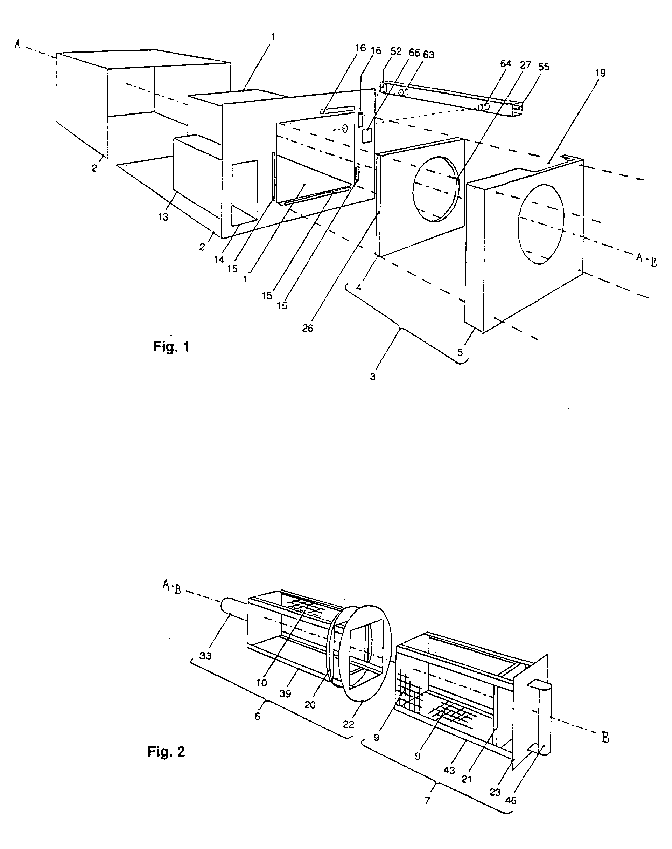

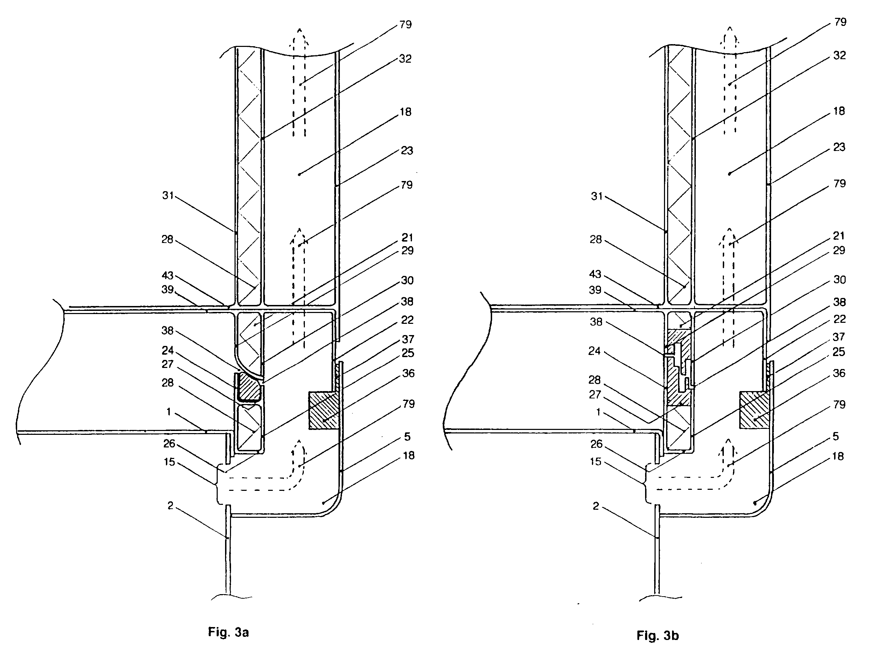

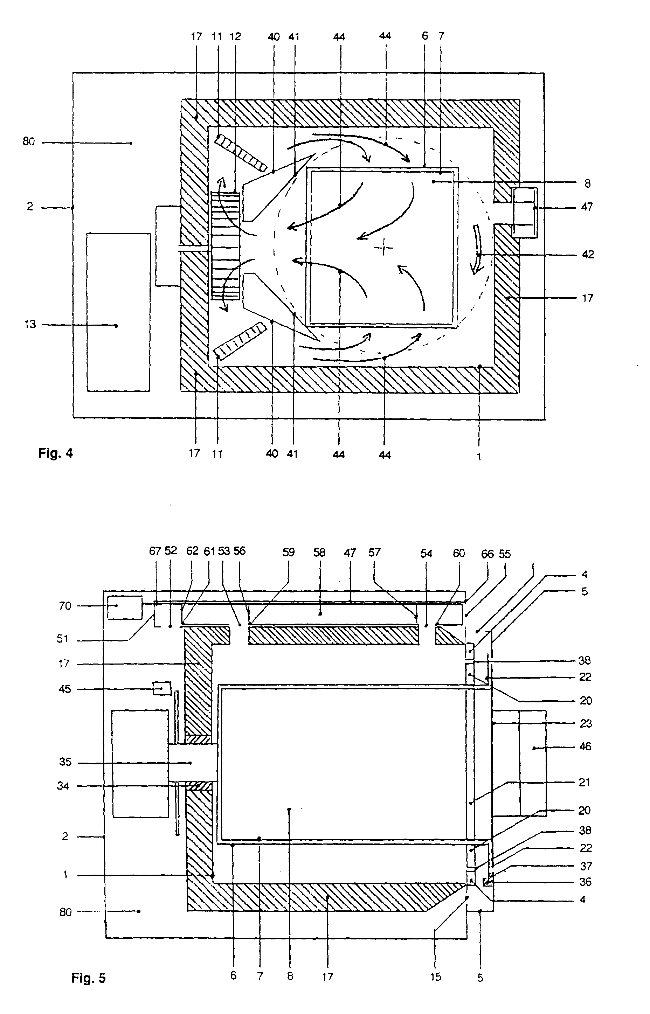

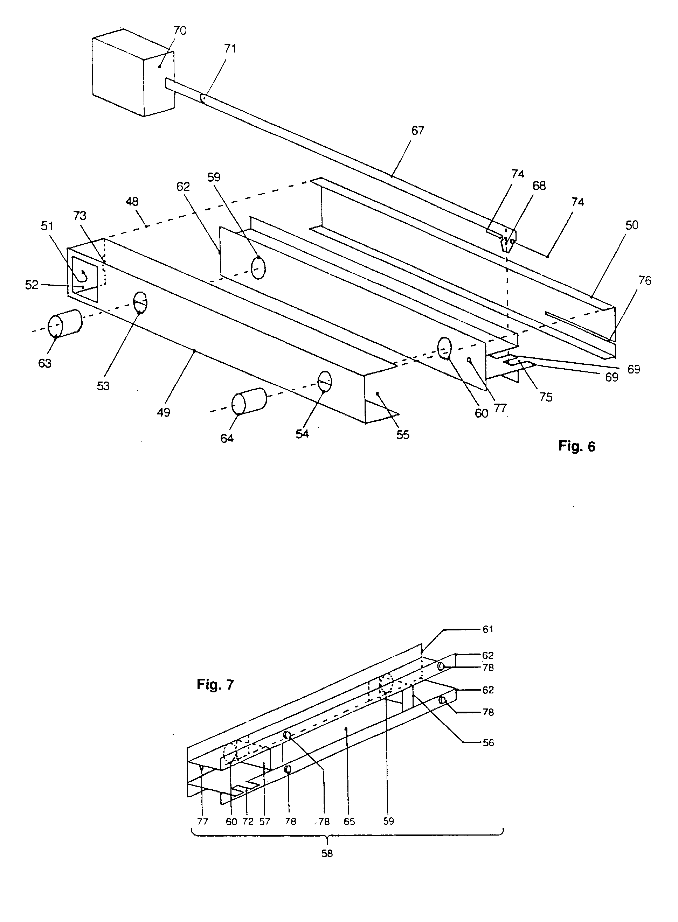

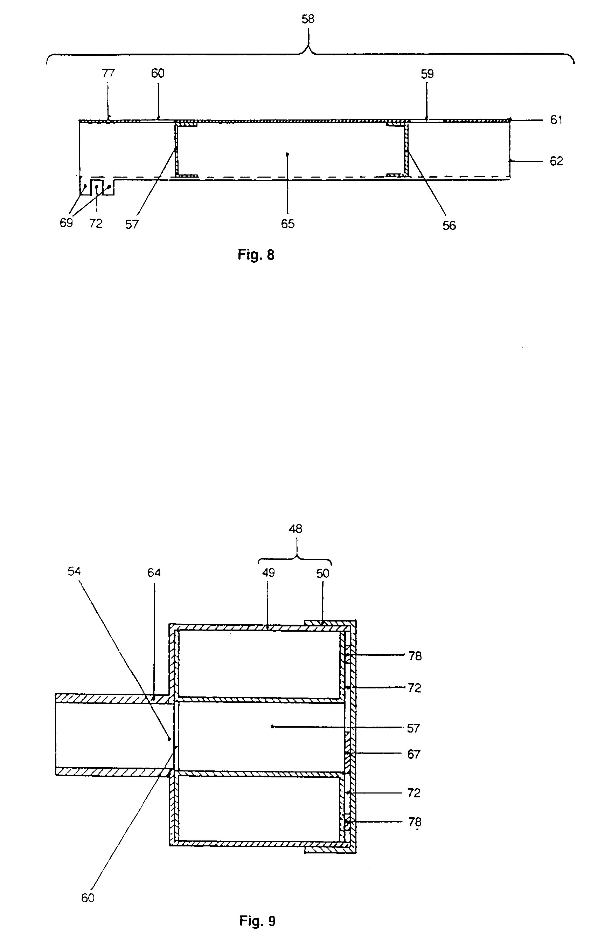

The enclosed drawings show an embodiment of a hot-air oven according to the present invention. While figure 1 shows an exploded view of an oven without basket holder and basket, figure 2 shows an exploded view of a basket holder and basket. Figure 3 is a cross-section through a part of the oven having the modifications according to figures 3a and 3b. While figure 4 is a cross-section through the oven, in parallel to and just behind the heat protection shield, figure 5 shows a vertical cross-section through the longitudinal axis of the basket holder. Figure 6 is an exploded view of a ventilation device, controlling the amount of water vapour in the oven compartment during working conditions. Figure 7 shows a view of the ventilation slide turned over 180 degrees from the exploded view according to figure 6. Figure 8 is a cross-section through the ventilation device, horizontally and in parallel with the longitudinal axis, and figure 9 is a cross-section through the ejector perpendicular to the longitudinal axis of the device.

The oven is constructed from a number of elements, see figure 1, all of them being an integrated part of the total function. Some of these elements are; an oven compartment 1, a surrounding housing 2, a front panel 3 that consists of a heat protecting shield 4, a cooling-air duct 5 and one part of a rotating basket holder 6 and a basket 7, figure 2, these jointly forming a food processing compartment 8. On three of its sides the basket 7 is covered with mesh 9, that surrounds the food processing compartment 8. The basket holder 6 is coverd on one side with mesh 10 that, when the basket 7 is pushed into the basket holder 6, forms the fourth net-covered side of the food processing compartment 8. All moving parts going through the walls of the oven compartment 1 are equipped with devices obstructing air passing in and out of the oven compartment 1. The oven compartment 1 is equipped with heating elements 11 for heating the air in the oven compartment 1 which is kept circulating by the means of a fan 12. The housing 2 surrounds, in an air-tight manner, five out of six sides of the oven compartment 1. Inside this housing 2 a fan 13 is placed that sucks air through a filter 14 creating an over pressure in a space between the housing 2 and the oven compartment 1. By placing two groups of holes in the housing 2, on calculated spots, one group of a large number of holes serving as cooling air outlets 15, and a smaller number of holes serving as air outlets 16 to the surrounding air, the oven compartment 1 can be flushed in a desired way by cooling air being passed in between the housing 2 and the oven compartment 1 by the fan 13. The air coming out of the housing 2 through the larger group of holes 15 is used as cooling air in the front panel 3. In order to allow more advantageons use of, and thus to reduce, the airflow wich is created by the fan 13 and wich has to cool the front-panel 3, the oven compartment 1 is equipped with a insulating material 17, figure 4 and 5, on sides that are surrounded by the husing 2, which minimizes the heat absorption of the airflow generated by the fan 13 from the oven compartment when the cooling air is passing around it, before being pressed out in the front panel 3 through the holes 15.

The front panel 3 consists of two components. At the inner side the part, i.e.the sealing heat shield 4, which points directly towards the even compartment 1 and also forms the sixth and by the housing 2 not surrounded side of the oven compartment 1, and a cooling-air duct 5 connected to this heat shield 4 and, placed on the outer side of this and surrounding the heat shield 4, said cooling-air duct 5 being the only part of the front panel that is touchable from the outside. The inner part of the heat shield 4 is limited to some of the openings 15 which serve as cutlets for the main part of the cooling air that by the tan 13 by overpressure is pressed into the space between the housing 2 and the oven compartment 1. The outer part of the front pane! 3, the cooling-air duct 5, surrounds the cooling air openings 15 and forms an air duct 18, figure 3, which outlet 19 to the surrounding air, is in such a relationship to the openings 15 that a controlled airflow is obtained through the whole of the front pane! 3. This is to get an optimum and, as regards the surface, even temperature control of the touchable parts of the front panel 3. The function is analogous even when both parts 4 and 5 of the front panel 3 are broken through in such a way that a rotating food processing compartment 8 can be reached without dismantling the front panel 3. These parts, the basket holder 6, the basket 7 and the or those parts connected with them, are always, at the breaking through of the front panel 3 of the oven compartment, designed analogous to the front panel 3 in such a way that the heatshield 4 and its corresponding units 20, 21 in the broken-through parts 6, 7, together with the cooling-air duct 5 and its corresponding units 22, 23 in the broken-through parts 6, 7, functionally form a thermal and aerodynamics part of the total front panel 3. The air inlet into the front panel 3 through the air outlets 15 in the housing 2 should be placed in relation to the air outlets 19 in the heat shield 4 as far away as possible, however in such a way that a good and evenly distributed cooling airflow through the total cooling-air duct 18 is reached.

One part of the airflow, not necessary to use in the front panel 3 to reduce the temperature of touchable parts, is allowed to flow out of the housing 2 through the holes 16 in such a way that this airflow, outside of the front panel 3, is mixed with air that flows out through the outlet opening 19 and has been healed during its travel through the front panel 3 with the corresponding unit to the basket holder 6 and the basket 7, and such that the air, coming out through the holes 16, thereby not only directs this heated air cut into the surrounding air, away from the oven but reduces the temperature of the heated air to such a degree that it is not considered unpleasant to the user.

The heats hield 4 consists of two relatively c!osely placed metal plates, 24, 25, see figure 3, which touch one another only of the outer edges 26 or, in the case of another object passing through, at the limited contact surfaces 27, of the heat protection shield 4. Due to the as small as possible contact surfaces between the inner 24 and the outer 25 metal plates in the heat shield 4, covering the oven compartment 1, the conduction of heat in metal between the two plates is kept to a minimum. To keep the transportation of heat by convection and radiation between the inner plate 24 and the outer plate 25 at a minimum, the space between them is equipped with a suitable filling-material 28.

The basket holder 6 and basket 7 passing through the front panel 3 have parts corresponding to the heat shield 4 and cooling-air duct 5 of the front panel 3 corresponding parts, viz., heat shields 20, 21, and cooling-air ducts 22, 23. These parts 20, 21, 22, 23 are, when the basket holder 6 and basket 7 are pushed all the way in, levelled with the two parts 4 and 5 of the front-panel 3. The heat shield 20 of the basket holder 6 consists, in the same way as the heat shield 4 of the frontpanel, of two plates, the inner plate 29 and the outer plate 30, and in the space between them filling material 28 is placed. The heat shield 21 of the basket 7 is constructed from two plates in the same way as the heat shield 4 of the front panel 3, viz. the inner plate 31 and the outer plate 32 with filling material 28 between them.

The rotating basket holder 6, which by the means of a stub axel 33 is suspended in a driverunit 35, equipped with a sealing device 34, facing the oven compartment 1, figure 5, is in its front part equipped with a to the heat shield 4 of the front panel 3 corresponding part 20 and to the cooling-air duct 5 of the front panel 3 corresponding part 22. The cooling-air duct 5 serves also as holder for the front support bearing consisting of a support block 36 that absorbs the radial movements of the basket holder 6, and of a sealing and supporting part 37 that has the purpose of supporting outwardly directed axial movements. Thereby the rotating basket holder 6 is kept in place both radially and axially, and thereby the heat shield 20 is kept levelled with the heat shie!d 4 of the front panel and in contact with the sealing 37. The basket 7 has a heat shield 21 and a cooling-air duct 23 that, when the basket 7 is pushed all the way into the basket holder 6, have their respective heat shields 20, 21 and cooling-air ducts 22, 23 levelled with the heatshield 4 and the cooling-air duct 5 of the front panel 3. Between the static and dynamic parts of the heat shield 4 there is a gap 38, in this shown example designed with a fitted sealing to obstruct air passage through the gap 38 due to pressure differences. The holes 15 are the outlets for air overpressure that is built up in the oven housing 2 by the fan 13. The air travel in the front panel 3 takes place in the space 18 between the heat shield 4 and the cooling-air duct 5 and its corresponding units in the basket holder 6 and basket 7. The cooling air 79 that has passed through the front panel 3 is let out into the surrounding air through the outlets 19. The through the outlets 19 outflowing air is directed sway from the oven with the air of a relatively small flow of air from the holes 16. The from the holes 16 outflowing air is the air that has passed only through the space between the oven compartment 1 and housing 2.

The oven compartment 1 the design of which can be varied in many different ways, is here shown in the figures 3 and 4 by way of an example where in the food processing compartment 8 has a square cross-section In this example the oven compartment 1 is shown from the front in a section, cut in parallel with the front pane! 3. The oven compartment 1 is built up in a way so that the air flow generated by the fan 12 through two ducts 40 is forced to pass through the electrically heated elements 11 before it enters into the main part of the oven compartment 1. At the recirculation of the air to the fan 12 the rotating food processing compartment 8 is at such a place in the oven's compartment 1 that the hot air, with aid of the ducts 40, is forced to a major part to penetrate the food processing compartment 8, formed by the basket holder 6 and the basket 7. The basket holder 6 is suspended by means of the stub axel 33 suspended in a driving device 35 outside the oven's compartment 1. It rotates clockwise according to the rotation arrow 42. Due to the shape of the food processing compartment 8 with its square cross section and with its corners in the periphery four times per revolution a condition appears implying that the comers of the food processing comparment, which are formed by the guides 39 of the basket holder 6 guiding the corners of the basket 7, and guides 43, are in the immediate nearness of the ducts 41. By this arrangement the air is forced, according to the hot air flow arrows 44, to penetrate the food processing compartment 8 itself. When the food processing compartment 8, which can be filled with food products up to two thirds, rotates, this results in the fact that the product enclosed in the food processing compartment 8 goes with the one of the four sides of the food processing compartment 8 that moves upwards, and which temporarily during one revolution of rotation four times more or less covers the way of retum of the air flow back to the fan 12. This condition forces the hot air to flow around or through the product to be prepared white at the same time it is mixed therewith, resulting in a more efficient exposure of the food to the hot air flow, thereby giving a more even preparation of the products.

After full time of preparation the shutting off of the oven is effected with a timer or manually Through 2 switch 45 controlling the position of the basket holder 6, the latter always stops in such a manner that the basket 7 is turned with its opening facing upwards. The basket 7 is withdrawn by means of a handle 46 attached to the heat shield 21 of the basket 7.

The ventilating unit 47, fig. 5, with which the control of the proportion of water wapour in the oven compartment 1 is done, must be shaped so that, together with the heat shield 4 penetrated by the basket holder 6 and the basket 7, it gives a co-operating optimum function for the preparation of the food products. The gap 38 between the static part and the dynamic part of the heat shield 4, consisting of the basket holder 6 with the basket 7 inserted would, in an ideal situation be quite tight. Due to the high temperature, sometimes up to somewhat more than 300° C, together with the mechanical wearing that such a sealing ring would be exposed to at daily cleaning as well as at the dismantling that now and then must be done for more careful cleaning etc, such a sealing ring would not have the strength and serviceable life that one could be claim from the design within reasonable cost limits. For this reason the gap 38 is allowed to let through a small amount of air. Considering that the parts forming the gap 38 shall be robust and endure rough treatment to a certain degree the gap 38 cannot be given too small tolerances. The resistance of the air flow can he increased by changing the shape of the gap 38. In the two examples shown the gap 38a, fig. 3a, has been sealed with a cheramic textile braid, placed into the static heat shield 4. Tests, which have turned out satisfactorily, have also been done without a gasket and in this case the opposed surfaces of the gap 38b, fig. 3b, were provided with cams, means, giving a braking maze effect. All gaskets had in common the feature that they were efficient in braking the air flow but not quite tight, which they would not have been anyway after a long period of practical use.

The sealing device 34 that surrounds the driver unit 35 is conventionally manufacturing. In the example above, it is, due to the high heat, made of 2 cheramic material, which in a cheap and simple way fulfils its function at the actual rotation speed of barely 0.1 RPS, despite the fact that in this design it is not totally impervious to air.

The fan 12 for the hot air of the oven, rotating at up to 50 RPS, and where the temperature of the shaft is relatively high, cannot either be provided with an ideal gasket. The air leakage is, however, kept at a very low level through a conventional procedure with a radial fan wheel on the cold side of the shaft as well. All the gaps are narrow. Should the difference in air pressure be large at both shaft ends there will even here be an air leakage, which, however, is very small.

Tests have shown that different effects can arise, which are dependent on the shape of the ventilating device as well as the co-ordination of the different parts of the oven and their functions.

One of the undesired effects that has emergefrom the tests is the fact that, if the oven compartment 1 has been provided with a ventilating device that is continuously in direct and quite open contact with the surrounding air, an overstream of air will appear at the gap 38, mainly arising from the cold air duct 18 of the front panel 3 in the oven compartment 1, due to the prevailing difference of air-pressures as well as via the two through holes for the shafts, of the fan 12 and for the driver unit 35. This can result in an over-airing with consequential dry and hard prepared food products.

Another undesired effect is that if the sealing device 34 which is to tighten around the driver unit 35 and the through-holes of the shaft of the fan 12, are very leaky, and if the ventilating device does not have an atmospherical connection, the cooling air from the space between the oven compartment 1 and the housing 2 penetrates into the oven compartment 1 and then presses hot air into the cooling air that passes through the cooling air duct 18, which could lead to the upper right-hand comer of the heat protecting-shield 4 getting warm. The reason for the hot air stream in this case is due to the higher air-pressure in the outer housing 2 in relation to the air-pressure of the cooling air duct 18.

All the undesired effects, which can be detriment al of the function referred to, can be reduced to a practically negligible level by the mode of operation of the ventilating device 47, described below, and shown as an example of design in figs. 5 to 8.

The ventilating device 47 is made of a ventilating tube 48, fig. 6, consisting of a three-side enclosing part 49, a cover 50, and one part 51 closing one end of the tube. The ventilating tube 48 has four openings. One inlet opening 52 for the ventilating air, one injector opening 53, one ejector opening 54, and one outlet opening 55. In the ventilating tube 48 there is an injector 56, fig. 7, and an ejector 57, both totally integrated with the ventilating slide 58. The ventilating tube 48 runs in parallel with one of the sides of the oven compartment 1 outside its insulating material 17, and in the simplest embodiment with regard to construction, also in parallel with the longitudinal axis of the basket holder 6. The ventilating tube 48 in this case stretches from the front of the housing 2 to the rear edge of the oven compartment 1, including its isolating material 17, and protruding further at least over a distance corresponding to the width of the ventilating tube 48. In this protruding part the inlet opening 52 for the ventilating air is found. Inside the ventilating tube 48 the ventilating slide 58 is lodged, displaceable in the lengthwise direction of the ventilating tube 48. The ventilating slide 58 with the injector 56 and the ejector 57, have one opening each in the ventilating slide 58. These openings are named injector valve 59 and ejector valve 60. The valve 61 of the inlet opening 52 consists of all the rear part 62 of the ventilating slide 58. The three valves 59, 60, 61 open at the same time, when the ventilating device 47 is switched on for function as a result of the ventilating slide 58 moving in a direction towards the front panel 3. In this position the valves 59, 60, 61 of the ventilating slide 58 open up the ventilating air inlet opening 52 to the ventilating device 47 as well as the opening to the injector tube 63 and to the ejector tube 64. The three openings are all situated in the middie side of the ventilating tube 48, that is, in the part 49 that encloses the three sides. The fourth opening of the ventilating tube 48, the outlet opening 55, is always open independenly of the position of the ventilating slide 58. The injector 55 and the ejector 57 can be identical as to their design. As shown in the example they can be given a U-shape with the legs of the U being about one and a half times longer than the width thereof. The U-shaped injector 56 and the ejector 57 enclose their their respective injector and ejector ventilating openings 53 and 54, when the ventilating slide 58 is in its open front position. Between the injector 56 and the ejector 57 there is a ventilating tube filling 65. The filling has the same witdh and height as the front surfaces of the injector 56 and the ejector 57, respectively.

The cross-sectional aera of the ventilating tube 48 perpendicularly to, to the airstream is at least twice as large as one of the cross-sectional areas of the injector valve 59 or the ejector valve 60. The air stream in the ventilating tube 48 between the injector 56 and the ejector 57 will then be large than the heated, moisture saturated air that has passed through the oven compartment 1.

Owing to this arrangement, the warm ventilating air mixes, at the outlet opening 55, with the cold bypass air, so that the outlet air gets a low, non-scorching temperature. The temperature can be regulated by varying the proportion between the ventilating air and the bypass air. The inlet opening 52 is at least as large as the cross-sectional area of the ventilating tube 48.

The outlet opening 55 of the ventilating tube 48 is placed in front of a front opening 66 in the front wall of the housing 2. The injector 56 is placed close to the air inlet through the inlet opening valve 61, and has its opening directed inwards towards the air stream direction. The ejector 57 is placed near the outlet opening 55, and has its opening turned outwards towards this. The distance between the inlet opening valve 61 and the injector valve 59 must be big enough to make place for the openings of the ventilating slide 58 between these without showing an opening. Through the injector tube 63 the injector valve 59 is connected to the oven compartment 1, and so is the ejector valve 60, through the ejector tube 64. The distance in the oven compartment 1 between the injector tube 53 and the ejector tube 64 must not be too small if the ventilating air inside the room of the even compartment 1 shall have enough time to be warmed up and saturated with water vapour before it is aired out. Consequently the injector tube 63 is placed near the rear wall and the ejector tube 64 near the heat protecting shield 4 in the oven compartment 1.

The ventilating slide 58 is moved by a coupling bar 67 provided with a coupling hook 68, which is coupled together with the ventilating slide 58 in the slide coupling 69. A motor 70 of conventional type with a forward and bakward movment is connected to to the coupling bar 67 in such a way that it is moveable vertically. The coupling bar 67, being of small thickness, runs close to the lid 50 of the ventilating tube 48 in the intervening space 72 that is slightly bigger than the thickness of the coupling bar 67. The latter extends to the joint 71 via a slot 73 in the rear closed part 51 of the ventilating tube 48. The coupling hook 68 of the coupling bar 67 is formed with two opposite notches 74 of V-shape, whereby the coupling hook 68 remains in the slide coupling 69 during the movements forwards and backwards of the coupling bar 67. In the slide coupling 69 there is an opening 75 big enough to only just lift the coupling notch 68 and disconnect it from the ventilating slide 58. The slide coupling 69 is long enough to extend slightly outside the lid of the ventilating tube 50 through a slot 76, and this prevents the thin coupling notch 68 from slipping out sideways from its fastening in the slide coupling 69. The slot 76 is long enough to let the ventilating slide move freely forwards and backwards between the open and closed positions. It goes all the way out to the front edge of the ventilating tube 48. Then the ventilating slide 58 can be removed by lifting up the coupling notch 68 and be taken out through the outlet 55 and the front opening 66 to be cleaned.

In the part of the ventilating slide 58 covering the ejector tube 64, when the ventilating slide 58 is in a closed position, there is a small opening 77 the size of which is adapted to the overpressure made by the cooling air fan 13 of the in the outer housing 2 and the amount of air that can get into the oven compartment 1 via the leakage at the passing through of the shaft and at the edge 27 of the heat protecting shield 4. When this opening 77 is given the right size, an overpressure, not significant, is formed in the oven compartment 1. Under these circumstances no hot air forces its way out from the oven compartment 1 to the cooling air duct 18, thereby diminishing the effect of the cooling air. Perfect pressure equalization cannot be achieved through this simple method, but the little difference of pressure arising through the size of the gaps due to variations in manufacturing, in a positive or negative direction, has proven in practical tests to be of no importance whatsoever.

### Position numbers and denomination for details

The parenthesis behind the denomination describes on which figures the position numbers can be found.
1 Oven compartment (1, 3a, 3b, 4, 5)
2 Housing (1, 3a, 3b, 4, 5)
3 Frontpanel (1)
4 Heat protecting shield (1,5)
5 Cooling-air duct, from the frontpanel (1, 3a, 3b, 5)
6 Basket holder (2, 5)
7 Basket (2, 5)
8 Food processing compartment (4, 5)
9 Mesh, of the basket (2)
10 Mesh, of the basket holder (2)
11 Heating element (4)
12 Fan, for hot air (4)
13 Fan, for cooling air (1, 4)
14 Filter, for the cooling air (1)
15 Air outlet, from the frontpanel (1, 3a, 3b, 5)
16 Air outlet, from the housing (1)
17 Isolating material, for the cooking compartment (4)
18 Cooled air duct, in the frontpanel (3a, 3b)
19 Air outlet, for the cooling air of the frontpanel (1)
20 Heat protecting shield, of the basket holder (2, 5)
21 Heat protecting shield, of the basket (2, 5)
22 Cooling air duct, of the basket holder (2, 3a, 3b, 5)
23 Cooling air duct, of the basket (2, 3a, 3b, 5)
24 Inner metal plate, of the static protecting shield ((3a, 3b)
25 Outer metal plate, of the static protecting shield ((3a, 3b)
26 Outer edges of the static heat protecting shield (1, 3a, 3b)
27 The limit contact surfaces, of the static heat protecting shield (1, 3a, 3b)
28 Filling-material, against convection and radiation (3a, 3b, 9)
29 The inner plate of the heat shield of the basket holder, dynamic part (3a, 3b)
30 The outer plate of the heat shield of the basket holder, dynamic part (3a, 3b)
31 The inner plate of the heat shield of the basket, dynamic part (3a, 3b)
32 The inner plate of the heat shield of the basket, dynamic part (3a, 3b)
33 Stub axel, of the basket holder (2)
34 Sealing device (5)
35 Driverunit (5)
36 Front support block (3a, 3b, 5)
37 Axially supporting part, and sealing (3a, 3b, 5)
38 Gap (3a, 3b, 5)
39 Guides, for the basket (2)
40 Duct, for hot air to the heating elements (4)
41 Duct, for the air to the fan (4)
42 Rotation arrov, for basket holder (4)
43 Guides, of the basket (2)
44 Hot air flow arrows (4)
45 Switch, controlling the position of the basket holder (5)
46 Handle, attached to the heat shield of the basket (2, 5)
47 Ventilating unit (1, 4, 5)
48 Ventilating tube (6, 9)
49 Ventilating tube, the three-side enclosing part (6, 9)
50 Cover, of the ventilating tube (6, 9)
51 Closing one end of the ventilating tube (5, 6)
52 Inlet opening (1, 5, 6)
53 Injector opening (5, 6)
54 Ejector opening (5, 6, 9)
55 Outlet opening (1, 5, 6)
56 Injector (5, 7, 8)
57 Ejector (5, 7, 8, 9)
58 Ventilating slide (5, 7, 8)
59 Injector valve (5, 6, 7, 8)
60 Ejector valve (5, 6, 7, 8)
61 Valve, of the inlet opening (5, 7, 8)
62 Rear part of the ventilating slide (5, 6, 7, 8)
63 Injector tube (1, 6)
64 Ejector tube (1, 6)
65 Ventilating tube filling (7, 8)
66 Front opening, in the front wall of the housing (1, 5)
67 Coupling bar (5, 6, 9)
68 Coupling hook (6)
69 Slide coupling (6, 7, 8)
70 Motor, for the slide movement (5, 6)
71 Joint, of the coupling bar (6)
72 Intervening space, for the coupling bar (9)
73 Slot, for the coupling hook (6)
74 Notches, two opposite of V-shape (6)
75 Opening, for the coupling notch (6, 8)
76 Slot, for the slide coupling (6)
77 Opening, for reduction of overpressure (6, 7)
78 Stub, for distance (9)
79 Cooling air flow, into the frontpanel (3a, 3b).

## Claims

1. A hot-air oven for preparing food without frying fat, said oven comprising a housing (2) and an oven compartment (1) within said housing with a container (6, 7) which is insertable into the oven compartment (1) through a front panel (3) thereof for receiving and preparing food products by means of hot air heated in the oven compartment by heating devices, characterized in that between the housing (2) and the oven compartment (1) a space (80) is designed that allows cooling air forced into the space (80) by a cooling air fan (13) to be distributed on the one hand to an air-duct (18) formed in the front panel (3) between heat shields (4, 20, 21) facing the side of the oven compartment (1) which is not surrounded by the housing (2) and cooling air ducts (5, 22, 23) connected to the housing (2) for guiding cooling air (79) through the air-duct (18) and on the other hand through a ventilation device (47) mounted in the oven compartment (1) for regulating the amount of water vapour in the oven compartment (1) under working conditions.

2. A hot-air oven as claimed in claim 1, characterized in that the cooling air fan (13) is arranged to suck in cooling air via a cooling air filter (14) for flushing of all the sides of the oven compartment, for keeping the outer surfaces of the oven at a touch-safe temperature and to provide the ventilation device (47) with a sufficent airflow to accomplish injector and ejector effects.

3. A hot-air oven as claimed in claims 1 and 2, characterized in that the housing (2) is equipped with openings (15) for supplying cooling air to the said duct (18) and to the outlet opening (19) of this and via an inlet opening (52) to the outlet opening (66) of the ventilation device (47), both of them to emit air to the atmosphere.

4. A hot-air oven as claimed in any one of the claims 1 to 3, characterized in that the ventilation device (47) regulates the amount of water vapour in the oven compartment (1) under working conditions by using some parts of the air flow of the device to reduce the energy and steam content of the ventilation air.

5. A hot-air oven as claimed in any one of the claims 1 to 4, characterized in that the ventilation device (47) is mounted in the cooling air guiding space (80) between the oven compartment (1) and the housing (2) and has the form of a ventilation duct (18).

6. A hot-air oven as claimed in any one of the claims 1 to 5, characterized in that the ventilation duct (48) of the ventilation device (47) is equipped with openings in the form of inlet openings (52), an injector opening (53) and an ejector opening (54) together with a movable ventilation slide (58).

7. A hot-air oven as claimed in any one of the claims 1 to 6 characterized in that a ventilation slide (58), the position of which is adjustable, in closed position is arranged to allow the oven compartment (1) to be connected to the atmosphere via a pressure relief device (77).

8. A hot-air oven as claimed in any one of the claims 1 to 7, characterized in that air outlet openings (16) are arranged to emit air from the housing (2) to direct and reduce the temperature of the outstreaming cooling air (79).

9. A hot-air oven as claimed in any one of the claims 6, 7 or 8 (when depending from claim 6), characterized in that the air flows through the duct (18) of the front panel (3) always, and independently of the position of the ventilation slide (58), are in a predetermined and thereby controllable relation to one another.

10. A hot-air oven as claimed in any one of the claims 1 to 9, characterized in that the heat protecting shield (4) and the cooling air outlet (5) of the front panel (3) form a cooled air duct (18), that is closely connected to the air outlet (15), in such a way that all the outstreaming or sucked-in air passing these air outlets is forced to pass through the cooled air duct (18) of the front panel (3).

## Patentansprüche

1. Heißluftofen zum Zubereiten von Nahrung ohne Bratfett mit einem Gehäuse (2) und einem Heizraum (1) sowie einem Behälter (6, 7), der mittels einer Stirnplatte (3) in den Heizraum einführbar ist, zur Aufnahme und Zubereitung von Nahrungsmittelprodukten mittels in dem Heizraum (1) durch Heizvorrichtungen erhitzter Heißluft, dadurch gekennzeichnet, daß zwischen dem Gehäuse (2) und dem Heizraum (1) ein Raum (80) vorgesehen ist, der die Verteilung der durch Kühlluftgebläse (13) in den Raum (80) zwangsgeführten Kühlluft ermöglicht, einerseits zu einem an der Stirnseite (3) des Ofens ausgeführten Luftkanal (18) zwischen Wärmeschutzschilden (4, 20, 21)- gegenüber der vom Gehäuse (2) nicht umgebenen Seite des Heizraums (1)- und Kühlluftkanälen (5, 22, 23), welche mit dem Gehäuse (2) zur Führung der Kühlluft (79) durch den Luftkanal (18) verbunden sind und andererseits durch eine im Heizraum (1) montierte Belüftungsvorrichtung (47) zur Regulierung der Wasserdampfmenge in dem Heizraum (1) unter Betriebsbedingungen.

2. Heißluftofen nach Anspruch 1, dadurch gekennzeichnet, daß ein Gebläse (13) vorgesehen ist, welches Kühlluft über ein Kühlluftfilter (14) ansaugt und alle Seiten des Heizraums umspült, um die Temperatur der Außenflächen berührungssicher zu bewahren und damit der Belüftungsvorrichtung (47) genügend Luft zugeführt wird, um Ausblas- und Einblaswirkungen zu erhalten.

3. Heißluftofen nach Anspruch 1 und 2, dadurch gekennzeichnet, daß das Gehäuse (2) mit Öffnungen (15) versehen ist, um Kühlluft dem Kanal (18) und deren Auslaßöffnung (19) zuzuführen, sowie durch eine Einlaßöffnung (52) zu der Auslaßöffnung (66) der Belüftungsvorrichtung (47), beides, damit Kühlluft in die Umgebung austritt.

4. Heißluftofen nach einem der Ansprüche 1 bis 3, dadurch gekennzeichnet, daß die Belüftungsvorrichtung (47) die Menge des Wasserdampfes im Heizraum (1) unter Betriebsbedingungen reguliert, wobei aus der Vorrichtung strömende Luft z.T. benutzt wird, um die in der Belüftungsluft beinhaltene Energie und Dampf zu reduzieren.

5. Heißluftofen nach einem der Ansprüche 1 bis 4, dadurch gekennzeichnet, daß die Belüftungsvorrichtung (47) in dem Kühlluftführungsraum (80) zwischen dem Heizraum (1) und dem Gehäuse (2) montiert ist und als Ventilationsrohr (18) ausgebildet ist.

6. Heißluftofen nach einem der Ansprüche 1 bis 5, dadurch gekennzeichnet, daß das Ventilationsrohr (48) der Belüftungsvorrichtung (47) Öffnungen in der Form von Einlaßöffnungen (52), eine Einblasöffnung (53) und eine Ausblasöffnung (54) zusammen mit einem beweglichen Ventilationsschlitten (58) aufweist.

7. Heißluftofen nach einem der Ansprüche 1 bis 6, dadurch gekennzeichnet, daß der Ventilationsschlitten (58), deren Position einstellbar ist, in geschlossener Stellung derart ausgeführt ist, daß der Heizraum (1) mit der Umgebung mittels Überdruckvorrichtung (77) verbunden ist.

8. Heißluftofen nach einem der Ansprüche 1 bis 7, dadurch gekennzeichnet, daß Luftauslaßöffnungen (16) ausgebildet sind, um die Luft aus dem Gehäuse (2) auszulassen, damit die Temperatur der ausströmenden Kühlluft (79) gesteuert und reduziert wird.

9. Heißluftofen nach einem der Ansprüche 6, 7 oder 8 (wenn vom Anspruch 6 abhängig), dadurch gekennzeichnet, daß die Luftströme durch den Kanal (18) der Stirnplatte (3) stets und unabhängig von der Position des Ventilationsschlittens (58) in vorbestimmter und hierbei steuerbarer Beziehung zueinander stehen.

10. Heißluftofen nach einem der Ansprüche 1 bis 9, dadurch gekennzeichnet, daß das Wärmeschutzschild (4) und die Kühlluftauslaßöffnung (5) der Stirnplatte (3) einen Kühlluftkanal (18) bilden, der mit dem Luftauslaß (15) eng verbunden ist, derart daß die ganze durch diese Öffnungen ausströmende oder angesaugte Luft, durch diesen Kühlluftkanal (18) der Stirnplatte (3) zwangsgeführt wird.

## Revendications

1. Four à air chaud pour la préparation des aliments sans graisse de cuisson, le dit four comprenant un châssis (2) et un compartiment four (1) à l'intérieur dudit châssis avec un récipient (6, 7) pouvant être introduit dans le compartiment four (1) en passant par le panneau frontal (3) de celui-ci servant à la réception et à la préparation des produits alimentaires au moyen d'air chaud chauffé dans le compartiment four au moyen de dispositifs de chaufferie, caractérisé en ce que entre le châssis (2) et le compartiment four (1) un espace (80) est conçu qui permet à l'air de refroidissement entré de force dans cet espace (80) par un ventilateur (13) d'air de refroidissement d'être distribué d'une part vers un canal d'air (18) formé sur le panneau frontal (3) entre les boucliers antichaleur (4, 20, 21) situés en face du côté du compartiment four (1) non entouré par le châssis (2) et des canaux d'air de refroidissement (5, 22, 23) reliés au châssis (2) pour le guidage de l'air de refroidissement (79) à travers le canal d'air (18) et d'autre part à travers un dispositif de ventilation (47) monté dans le compartiment four (1) pour régler la quantité de vapeur d'eau dans le compartiment four (1) en régime de fonctionnement.

2. Four à air chaud selon la revendication 1, caractérisé en ce que le ventilateur d'air de refroidissement (13) est conçu pour aspirer l'air de refroidissement par l'intermédiaire d'un filtre d'air de refroidissement (14) pour en inonder tous les côtés du compartiment four, pour garder les surfaces externes du four à une température permettant d'y toucher en sécurité et pour apporter suffisamment d'air au dispositif de ventilation (47) pour obtenir des effets d'injection ou d'éjection.

3. Four à air chaud selon des revendications 1 et 2, caractérisé en ce que le châssis (2) est équipé d'ouvertures (15) pour alimenter en air de refroidissement ledit canal (18) et l'ouverture de sortie (19) de celui-ci et, par l'intermédiaire d'une ouverture d'admission (52), l'ouverture de sortie (66) du dispositif de ventilation (47), les deux, pour émettre de l'air dans l'atmosphère.

4. Four à air chaud selon l'une des revendications 1 à 3, caractérisé en ce que le dispositif de ventilation (47) règle la quantité de vapeur d'eau dans le compartiment four (1) en régime de fonctionnement en utilisant de l'air du dispositif pour réduire le contenu énergétique et en vapeur de l'air de ventilation.

5. Four à air chaud selon l'une des revendications 1 à 4, caractérisé en ce que le dispositif de ventilation (47) est monté dans l'espace (80) guidant l'air de refroidissement entre le compartiment four (1) et le châssis (2) et a la forme d'un tuyau de ventilation (18).

6. Four à air chaud selon l'une des revendications 1 à 5, caractérisé en ce que le tuyau de ventilation (48) du dispositif de ventilation est équipé d'ouvertures de la forme d'ouvertures d'admission (52), d'une ouverture d'injecteur (53) et d'une ouverture d'éjecteur (54), avec un chariot de ventilation mobile (58).

7. Four à air chaud selon l'une des revendications 1 à 6, caractérisé en ce que le chariot de ventilation (58) dont la position est ajustable, en position fermée, est conçu pour permettre au compartiment four (1) d'être relié à l'atmosphère par l'intermédiaire d'un dispositif de surpression (77).

8. Four à air chaud selon l'une des revendications 1 à 7, caractérisé en ce que les ouvertures de sortie de l'air (16) sont conçues pour laisser échapper l'air du châssis (2) pour diriger et réduire la température de l'air de refroidissement (79) qui s'échappe.

9. Four à air chaud selon l'une des revendications 6, 7 ou 8 (si elle dépend de la revendication 6), caractérisé en ce que les écoulements d'air à travers le canal (18) du panneau frontal (3) sont toujours, et indépendamment de la position du chariot de ventilation (58), en rapport prédéterminé et ainsi contrôlable les uns envers les autres.

10. Four à air chaud selon l'une des revendications 1 à 9, caractérisé en ce que le bouclier antichaleur (4) et la sortie d'air de refroidissement (5) du panneau frontal (3) forment un canal d'air de refroidissement (18) relié étroitement à la sortie d'air (15), si bien que tout l'air qui s'échappe ou qui est aspiré, passant ces sorties d'air est forcé à passer à travers le canal d'air de refroidissement (18) du panneau frontal (3).
